# EUROPEAN PATENT SPECIFICATION

(11) **EP 2 683 925 B1**
(45) Date of publication and mention of the grant of the patent: **26.11.2014**
(21) Application number: 12712284.4
(22) Date of filing: 20.02.2012
(51) Int. Cl.: F02B 37/013, F02B 33/44, F01N 13/10, F02B 29/04, F02B 37/007, F02B 75/22

(54) **METHOD FOR UPGRADING AN ENGINE, UPGRADE KIT FOR AN ENGINE AND INTERNAL COMBUSTION ENGINE**
VERFAHREN ZUR AUFRÜSTUNG EINES MOTORS, AUFRÜSTUNGSKIT FÜR EINEN MOTOR UND BRENNKRAFTMASCHINE
PROCÉDÉ POUR LA MISE À NIVEAU D'UN MOTEUR, MATÉRIEL POUR LA MISE À NIVEAU D'UN MOTEUR ET MOTEUR À COMBUSTION INTERNE

(30) Priority: 11.03.2011 FI 20115243
(43) Date of publication of application: 15.01.2014
(73) Proprietor: Wärtsilä Finland Oy, 65380 Vaasa (FI)
(72) Inventor: RAIKIO, Tero, FI-65230 Vaasa (FI); SANDBERG, Juho, FI-20360 Turku (FI)
(74) Representative: Berggren Oy Ab
(86) International application number: PCT/FI2012/050161
(87) International publication number: WO 2012/123629

(56) References cited:
- EP-A1- 2 415 988
- WO-A1-2009/147287
- DE-A1-102008 061 222
- GB-A- 1 603 575
- US-A1- 2003 159 443

## Description

### Technical field of the invention

The present invention relates to a method for upgrading a turbocharged internal combustion engine according to the preamble of claim 1. The invention also concerns an upgrade kit for a turbocharged internal combustion engine and a turbocharged internal combustion engine in accordance with the preambles of other independent claims.

### Background of the invention

Conventionally, most large diesel and gas engines have been turbocharged with one-stage turbocharging. In one-stage turbocharging, exhaust gases from the engine are guided through a single turbocharger where they rotate a turbine, which in turn rotates a compressor that pressurizes the intake air. Engines where the cylinders are arranged in a V-configuration might be provided with one turbocharger for each bank of the engine. The maximum charge pressure that can be achieved with one-stage turbocharging is typically around 5 bar. Nowadays, it has become increasingly common to provide new engines with two-stage turbocharging, where two turbochargers are connected in series. The exhaust gases from the engine are guided into the turbine of a high-pressure turbocharger and from there into the turbine of a low-pressure turbocharger. The intake air goes first through the compressor of the low-pressure turbocharger and then through the compressor of the high-pressure turbocharger into the cylinders of the engine. In case of a V-engine, the engine can be provided with two high-pressure turbochargers and two low-pressure turbochargers. With two-stage turbocharging, much higher charge pressures can be achieved. The maximum charge pressure in engines that are provided with two-stage turbocharging is typically around 12 bar. The fuel consumption of an engine can be reduced even by 5 percent with two-stage turbocharging compared to one-stage turbocharging.

Due to the long service life of internal combustion engines, there are a lot of engines that are provided with one-stage turbocharging in use. The fuel economy of these engines could be improved significantly by upgrading them to involve two-stage turbocharging. However, upgrading of existing engines is often very difficult and expensive. The existing turbocharger could be replaced with a new turbocharging unit that comprises two turbochargers connected in series, but due to the large size of this kind of arrangements, it might be impossible especially in ships to get the unit into the engine room. In addition, there is often not enough space for a larger turbocharger arrangement. Still another problem is that the original charge air receiver is not designed for high charge pressure and might not sustain the higher pressure.

Examples of two-stage turbo charging systems can be found in US 2003/0 159 443 A1, DE 10 2008 061 222 A1 or WO 2009/147 287 A1.

### Summary of the invention

The object of the present invention is to provide an improved method for upgrading a turbocharged internal combustion engine. The characterizing features of the method according to the present invention are given in the characterizing part of claim 1. Other objects of the invention are to provide an upgrade kit for a turbocharged internal combustion engine and a turbocharged internal combustion engine, as characterized by the characterizing parts of other independent claims.

According to the present invention, the upgrading method and the upgrade kit are aimed at upgrading an engine that comprises a first turbocharger that is arranged at the first end of the engine, a first charge air receiver that is connected to the compressor outlet of the first turbocharger and to the cylinders of the engine, and an exhaust manifold that is connected to the cylinders of the engine and to the turbine inlet of the first turbocharger. The method comprises the steps of disconnecting the exhaust manifold from the cylinders of the engine and from the turbine inlet of the first turbocharger, arranging a second turbocharger at the second end of the engine, connecting an exhaust manifold to the cylinders of the engine and to the turbine inlet of the second turbocharger, arranging an intermediate exhaust duct between the turbine outlet of the second turbocharger and the turbine inlet of the first turbocharger, connecting a second charge air receiver to the cylinders of the engine, connecting the second charge air receiver to the compressor outlet of the second turbocharger, and connecting the first charge air receiver to the compressor inlet of the second turbocharger.

The upgrade kit according to the present invention comprises a second turbocharger that is arrangeable at the second end of the engine, an intermediate exhaust duct that is arrangeable between the turbine outlet of the second turbocharger and the turbine inlet of the first turbocharger, and a second charge air receiver that is connectable to the cylinders of the engine and to the compressor outlet of the second turbocharger.

The internal combustion engine according to the present invention comprises an upgrade kit defined above.

The invention has several advantages. Since the original turbocharger and charge air receiver can be used, costs of the upgrade can be reduced. By positioning the second turbocharger at the second end of the engine, it is easier to fit a two-stage turbocharging arrangement in a small space. With the invention, operating costs of the engine can be reduced significantly due to better fuel economy. Since the original charge-air receiver is used to supply low-pressure charge air to the high-pressure turbocharger, it does not have to stand higher charge pressure caused by two-stage turbocharging.

According to an embodiment of the invention, the second charge air receiver is arranged inside the first charge air receiver. According to another embodiment of the invention, the engine comprises an insulation box and the exhaust manifold and the intermediate exhaust duct are arranged inside the insulation box. This reduces the space requirements of the upgrade arrangement.

According to another embodiment of the invention, the engine comprises a first charge air cooler that is arranged between the compressor of the first turbocharger and the first charge air receiver, and the upgrade kit comprises a second charge air cooler that is arranged between the compressor of the second turbocharger and the second charge air receiver.

According to another embodiment of the invention, the engine is a V-engine comprising one exhaust manifold, one first turbocharger and one first charge air cooler for each bank of the engine, and the upgrade kit comprises one second turbocharger, one second charge air cooler and one intermediate exhaust duct for each bank of the engine.

### Brief description of the drawings

Fig. 1 shows schematically an internal combustion engine with one-stage turbocharging.
Fig. 2 shows schematically the internal combustion engine of Fig. 1 that has been upgraded to comprise two-stage turbocharging.
Fig. 3 shows a side-view of an engine with one-stage turbocharging.
Fig. 4 shows a cross-sectional view of the engine of Fig. 3.
Fig. 5 shows a side-view of an engine which has been upgraded to comprise two-stage turbocharging.
Fig. 6 shows a cross-sectional view of the engine of Fig. 5.

### Detailed description of the invention

Embodiments of the invention are now described in more detail with reference to the accompanying drawings.

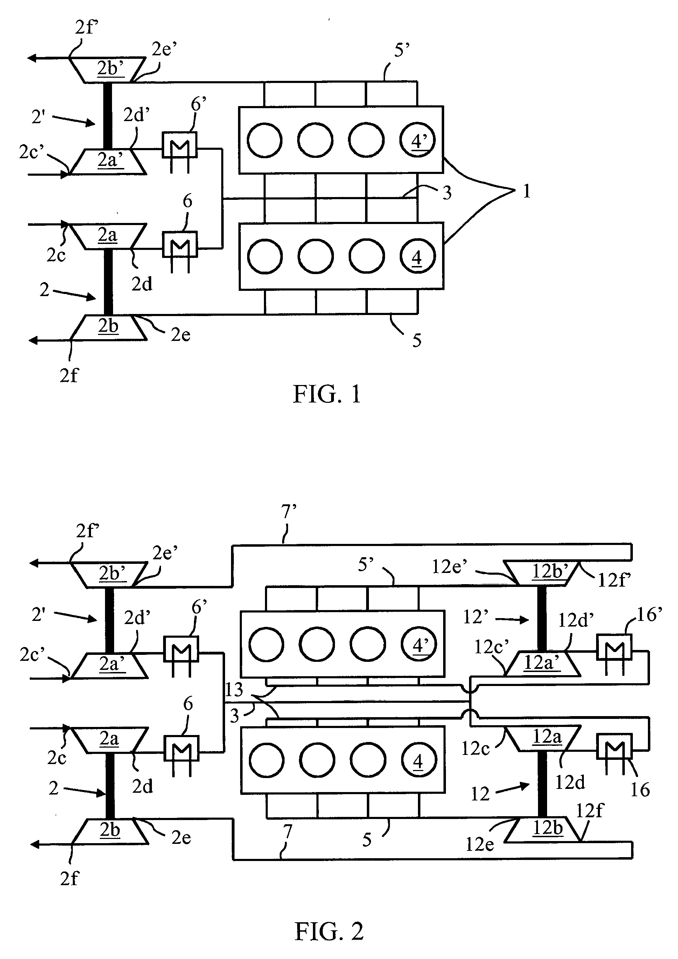

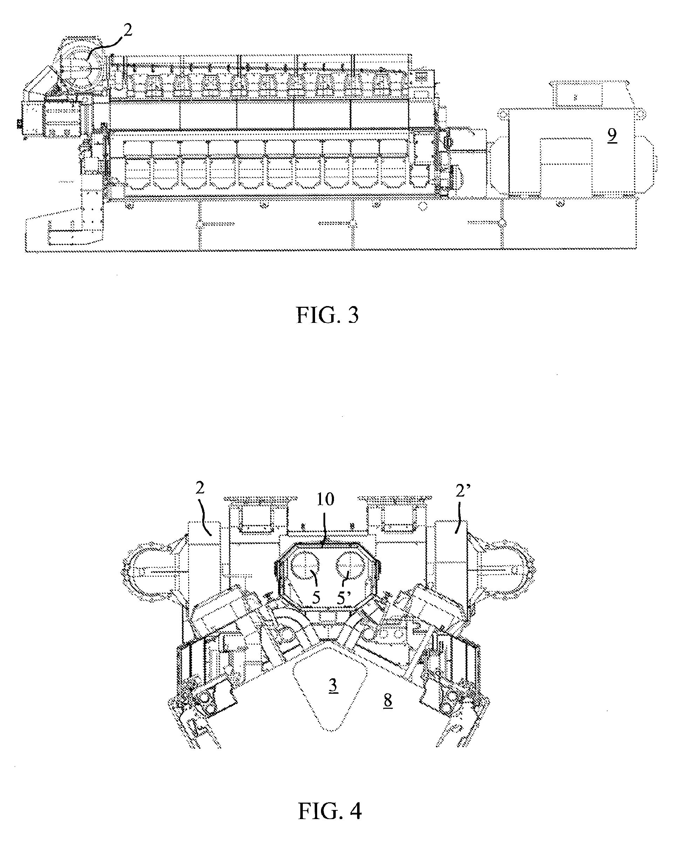

In figure 1 is shown schematically a turbocharged internal combustion engine 1. Figure 3 shows a side-view and figure 4 a cross-sectional view of the same engine 1. The engine 1 is a large V-engine that comprises a plurality of cylinders 4, 4', which are arranged in two banks. The engine 1 can be used for instance for driving a generator 9, as shown in figure 3. The intake air of the engine 1 is pressurized by one-stage turbocharging. Each bank of the engine 1 is provided with a turbocharger 2, 2' that comprises a compressor 2a, 2a' and a turbine 2b, 2b'. The turbochargers 2, 2' are arranged at the first end of the engine 1. The cylinders 4, 4' of the engine 1 are connected to the turbine inlets 2e, 2e' of the turbochargers 2, 2' with exhaust manifolds 5, 5'. The exhaust manifolds 5, 5' are located in an insulation box 10 that is arranged above the engine block 8, as can be seen in figure 4. The pressurized charge air is introduced into the cylinders 4, 4' of the engine 1 through a charge air receiver 3. In the embodiment of the figures, the charge air receiver 3 is arranged inside the engine block 8. Charge air coolers 6, 6' are arranged between the compressors 2a, 2a' of the turbochargers 2, 2' and the charge air receiver 3 for lowering the temperature of the pressurized intake air.

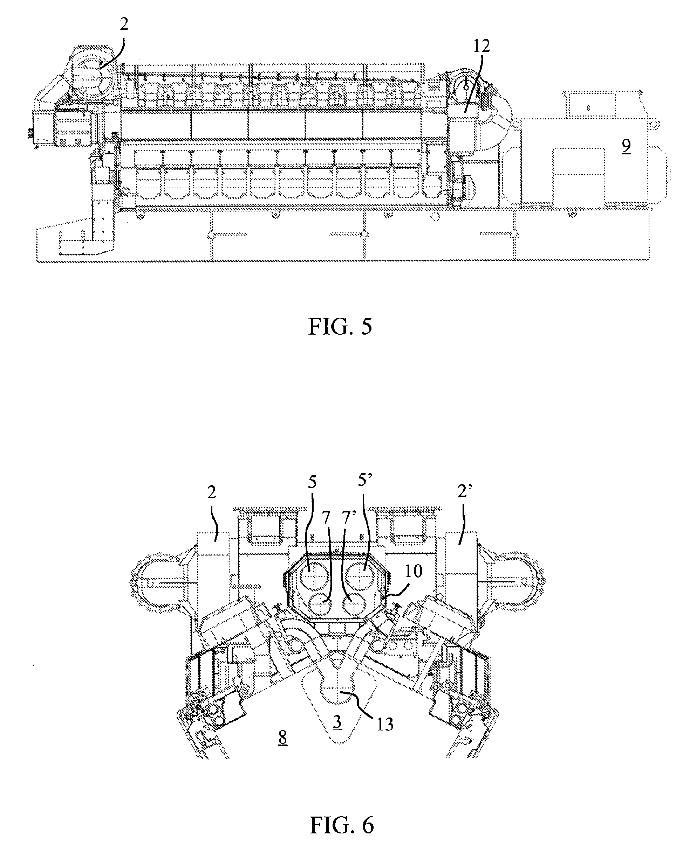

Figure 2 shows schematically how the engine 1 shown in figures 1, 3 and 4 has been upgraded to involve two-stage turbocharging. Figure 5 shows a side-view and figure 6 a cross-sectional view of the engine 1 of figure 2. The upgrade kit for the engine 1 comprises one turbocharger 12, 12' for each bank of the engine, a high-pressure charge air receiver 13, one intermediate exhaust duct 7, 7' for each bank of the engine and one charge air cooler 16, 16' for each bank of the engine 1. The intermediate exhaust ducts 7, 7' can be arranged between the turbine inlets 2e, 2e' of the turbines 2b, 2b' of the first turbochargers 2, 2' and the turbine outlets 12f, 12f' of the turbines 12b, 12b' of the second turbochargers 12, 12'.

When upgrading the engine 1, there is no need to remove the first turbochargers 2, 2' or the first charge air coolers 6, 6', but these parts can be left at their original positions. The exhaust manifolds 5, 5' that connect the cylinders 4, 4' of the engine 1 to the turbine inlets 2e, 2e' of the first turbochargers 2, 2' are disconnected from the engine 1 and from the first turbochargers 2, 2' and turned 180° so that the open ends of the exhaust manifolds 5, 5' point towards the second end of the engine 1. Alternatively, the exhaust manifolds 5, 5' can be replaced with new exhaust manifolds. The second turbochargers 12, 12' are mounted at the second end of the engine 1, and the turbine inlets 12e, 12e' of the second turbochargers 12, 12' are connected to the exhaust manifolds 5, 5'. The intermediate exhaust ducts 7, 7' are arranged between the turbines 12b, 12b' of the second turbochargers 12, 12' and the turbines 2b, 2b' of the first turbochargers 2, 2'. One end of each intermediate exhaust duct 7, 7' is connected to the turbine outlet 12f, 12f' of the respective second turbocharger 12, 12', and the other end is connected to the turbine inlet 2e, 2e' of the respective first turbocharger 2, 2'. In the embodiment of the figures, the intermediate exhaust ducts 7, 7' are located inside the original insulation box 10. The second charge air receiver 13 is arranged inside the first charge air receiver 3 and connected to the cylinders 4, 4' of the engine 1. The second charge air receiver 13 blocks the connection between the first charge air receiver 3 and the cylinders 4, 4' of the engine. The second charge air receiver 13 is also connected to the compressor outlets 12d, 12d' of the second turbochargers 12, 12'. The second charge air coolers 16, 16' are arranged between the compressors 12a, 12a' of the second turbochargers 12, 12' and the second charge air receiver 13. The first end of the first charge air receiver 3 is still connected to the compressor outlets 2d, 2d' of the first turbochargers 2, 2', as in the original configuration. The second end of the first charge air receiver 3 is connected to the compressor inlets 12c, 12c' of the second turbochargers 12, 12'.

In the upgraded engine 1, the first turbochargers 2, 2' work as low-pressure turbochargers, and the second turbochargers 12, 12' work as high-pressure turbochargers. Similarly, the first charge air receiver 3 works in the upgraded engine 1 as a low-pressure charge air receiver and the second charge air receiver 13 works as a high-pressure charge air receiver. Since the original charge air receiver 3 works as an intermediate receiver between the low-pressure turbochargers 2, 2' and the high-pressure turbochargers 12, 12', it does not have to stand the higher charge pressure that is achieved with two-stage turbocharging.

It will be appreciated by a person skilled in the art that the invention is not limited to the embodiments described above, but may vary within the scope of the appended claims. For instance, the invention can also be applied to engines where the cylinders are arranged inline.

## Claims

1. A method for upgrading a turbocharged internal combustion engine (1), which engine (1) comprises
- a first turbocharger (2, 2') that is arranged at the first end of the engine (1),
- a first charge air receiver (3) that is connected to the compressor outlet (2d, 2d') of the first turbocharger (2, 2') and to the cylinders (4, 4') of the engine (1), and
- an exhaust manifold (5, 5') that is connected to the cylinders (4, 4') of the engine (1) and to the turbine inlet (2e, 2e') of the first turbocharger (2, 2'),
**characterized in that** the method comprises the steps of
- disconnecting the exhaust manifold (5, 5') from the cylinders (4, 4') of the engine (1) and from the turbine inlet (2e, 2e') of the first turbocharger (2, 2'),
- arranging a second turbocharger (12, 12') at the second end of the engine (1),
- connecting an exhaust manifold (5, 5') to the cylinders (4, 4') of the engine (1) and to the turbine inlet (12e, 12e') of the second turbocharger (12, 12'),
- arranging an intermediate exhaust duct (7, 7') between the turbine outlet (12f, 12f) of the second turbocharger (12, 12') and the turbine inlet (2e, 2e') of the first turbocharger (2, 2'),
- arranging a second charge air receiver (13) inside the first charge air receiver (3),
- connecting the second charge air receiver (13) to the cylinders (4, 4') of the engine (1),
- connecting the second charge air receiver (13) to the compressor outlet (12d, 12d') of the second turbocharger (12, 12'), and
- connecting the first charge air receiver (3) to the compressor inlet (12c, 12c') of the second turbocharger (12, 12').

2. A method according to claim 1, **characterized in that** the intermediate exhaust duct (7, 7') is arranged inside an insulation box (10).

3. A method according to claim 1 or 2, **characterized in that** a charge air cooler (16, 16') is arranged between the compressor (12a, 12a') of the second turbocharger (12, 12') and the second charge air receiver (13).

4. An upgrade kit for a turbocharged internal combustion engine (1), which engine (1) comprises
- a first turbocharger (2, 2') that is arranged at the first end of the engine (1),
- a first charge air receiver (3) that is connected to the compressor outlet (2d, 2d') of the first turbocharger (2, 2') and to the cylinders (4, 4') of the engine (1), and
- an exhaust manifold (5, 5') that is connected to the cylinders (4, 4') of the engine (1) and to the turbine inlet (2e, 2e') of the first turbocharger (2, 2'),
**characterized in that** the upgrade kit comprises
- a second turbocharger (12, 12') that is arrangeable at the second end of the engine (1),
- an intermediate exhaust duct (7, 7') that is arrangeable between the turbine outlet (12f, 12f') of the second turbocharger (12, 12') and the turbine inlet (2e, 2e') of the first turbocharger (2, 2'), and
- a second charge air receiver (13) that is arrangeable inside the first charge air receiver (3) and connectable to the cylinders (4, 4') of the engine (1) and to the compressor outlet (12d, 12d') of the second turbocharger (12, 12').

5. An upgrade kit according to claim 4, **characterized in that** the upgrade kit comprises a charge air cooler (16, 16').

6. A turbocharged internal combustion engine (1) comprising
- a first turbocharger (2, 2') that is arranged at the first end of the engine (1),
- a first charge air receiver (3) that is connected to the compressor outlet (2d, 2d') of the first turbocharger (2, 2'), and
- an exhaust manifold (5, 5') that is connected to the cylinders (4, 4') of the engine (1),
**characterized in that** the engine (1) comprises an upgrade kit comprising
- a second turbocharger (12, 12') that is arranged at the second end of the engine (1) and of which compressor inlet (12c, 12c') is connected to the first charge air receiver (3),
- an intermediate exhaust duct (7, 7') that is arranged between the turbine outlet (12f, 12f') of the second turbocharger (12, 12') and the turbine inlet (2e, 2e') of the first turbocharger (2, 2'), and
- a second charge air receiver (13) that is arranged inside the first charge air receiver (3) and connected to the cylinders (4, 4') of the engine (1) and to the compressor outlet (12d, 12d') of the second turbocharger (12, 12').

7. An engine (1) according to claim 6, **characterized in that** the engine (1) comprises an insulation box (10) and the exhaust manifold (5, 5') and the intermediate exhaust duct (7, 7') are arranged inside the insulation box (10).

8. An engine (1) according to claim 6 or 7, **characterized in that** the engine (1) comprises a first charge air cooler (6, 6') that is arranged between the compressor (2a, 2a') of the first turbocharger (2, 2') and the first charge air receiver (3), and the upgrade kit comprises a second charge air cooler (16, 16') that is arranged between the compressor (12a, 12a') of the second turbocharger (12, 12') and the second charge air receiver (13).

9. An engine (1) according to any of claims 6-8, **characterized in that** the engine (1) is a V-engine comprising one exhaust manifold (5, 5'), one first turbocharger (2, 2') and one first charge air cooler (6, 6') for each bank of the engine (1), and the upgrade kit comprises one second turbocharger (12, 12'), one second charge air cooler (16, 16') and one intermediate exhaust duct (7, 7') for each bank of the engine (1).

## Patentansprüche

1. Verfahren zum Aufrüsten eines turbogeladenen Verbrennungsmotors (1), wobei der Motor (1) Folgendes umfasst:
einen ersten Turbolader (2, 2'), der am ersten Ende des Motors (1) angeordnet ist,
einen ersten Ladeluftbehälter (3), der an den Kompressorauslass (2d, 2d') des ersten Turboladers (2, 2') und die Zylinder (4, 4') des Motors (1) angeschlossen ist, und
einen Abgaskrümmer (5, 5'), der an die Zylinder (4, 4') des Motors (1) und den Turbineneinlass (2e, 2e') des ersten Turboladers (2, 2') angeschlossen ist,
**dadurch gekennzeichnet, dass** das Verfahren folgende Schritte umfasst:
Trennen des Abgaskrümmers (5, 5') von den Zylindern (4, 4') des Motors (1) und vom Turbineneinlass (2e, 2e') des ersten Turboladers (2, 2'),
Anordnen eines zweiten Turboladers (12, 12') am zweiten Ende des Motors (1),
Anschließen eines Abgaskrümmers (5, 5') an die Zylinder (4, 4') des Motors (1) und an den Turbineneinlass (12e, 12e') des zweiten Turboladers (12, 12'),
Anordnen einer Zwischenabgasleitung (7, 7') zwischen dem Turbinenauslass (12f, 12f') des zweiten Turboladers (12, 12') und dem Turbineneinlass (2e, 2e') des ersten Turboladers (2, 2'),
Anordnen eines zweiten Ladeluftbehälters (13) im Inneren des ersten Ladeluftbehälters (3),
Anschließen des zweiten Ladeluftbehälters (13) an die Zylinder (4, 4') des Motors (1),
Anschließen des zweiten Ladeluftbehälters (13) an den Kompressorauslass (12d, 12d') des zweiten Turboladers (12, 12') und
Anschließen des ersten Ladeluftbehälters (13) an den Kompressoreinlass (12c, 12c') des zweiten Turboladers (12, 12').

2. Verfahren nach Anspruch 1, **dadurch gekennzeichnet, dass** die Zwischenabgasleitung (7, 7') im Inneren eines Isolationsgehäuses (10) angeordnet wird.

3. Verfahren nach Anspruch 1 oder 2, **dadurch gekennzeichnet, dass** zwischen dem Kompressor (12a, 12a') des zweiten Turboladers (12, 12') und dem zweiten Ladeluftbehälter (13) ein Ladeluftkühler (16, 16') angeordnet wird.

4. Aufrüstsatz für einen turbogeladenen Verbrennungsmotor (1), wobei der Motor (1) Folgendes umfasst:
einen ersten Turbolader (2, 2'), der am ersten Ende des Motors (1) angeordnet ist,
einen ersten Ladeluftbehälter (3), der an den Kompressorauslass (2d, 2d') des ersten Turboladers (2, 2') und die Zylinder (4, 4') des Motors (1) angeschlossen ist, und
einen Abgaskrümmer (5, 5'), der an die Zylinder (4, 4') des Motors (1) und den Turbineneinlass (2e, 2e') des ersten Turboladers (2, 2') angeschlossen ist,
**dadurch gekennzeichnet, dass** der Aufrüstsatz Folgendes umfasst:
einen zweiten Turbolader (12, 12'), der am zweiten Ende des Motors (1) angeordnet werden kann,
eine Zwischenabgasleitung (7, 7'), die zwischen dem Turbinenauslass (12f, 12f') des zweiten Turboladers (12, 12') und dem Turbineneinlass (2e, 2e') des ersten Turboladers (2, 2') angeordnet werden kann, und
einen zweiten Ladeluftbehälter (13), der im Inneren des ersten Ladeluftbehälters (3) angeordnet und an die Zylinder (4, 4') des Motors (1) sowie den Kompressorauslass (12d, 12d') des zweiten Turboladers (12, 12') angeschlossen werden kann.

5. Aufrüstsatz nach Anspruch 4, **dadurch gekennzeichnet, dass** der Aufrüstsatz einen Ladeluftkühler (16, 16') umfasst.

6. Turbolader-Verbrennungsmotor (1), Folgendes umfassend:
einen ersten Turbolader (2, 2'), der am ersten Ende des Motors (1) angeordnet ist,
einen ersten Ladeluftbehälter (3), der an den Kompressorauslass (2d, 2d') des ersten Turboladers (2, 2') angeschlossen ist, und
einen Abgaskrümmer (5, 5'), der an die Zylinder (4, 4') des Motors (1) angeschlossen ist,
**dadurch gekennzeichnet, dass** der Motor (1) einen Aufrüstsatz umfasst, der Folgendes umfasst:
einen zweiten Turbolader (12, 12'), der am zweiten Ende des Motors (1) angeordnet ist und dessen Kompressoreinlass (12c, 12c') an den ersten Ladeluftbehälter (3) angeschlossen ist,
eine Zwischenabgasleitung (7, 7'), die zwischen dem Turbinenauslass (12f, 12f') des zweiten Turboladers (12, 12') und dem Turbineneinlass (2e, 2e') des ersten Turboladers (2, 2') angeordnet ist, und
einen zweiten Ladeluftbehälter (13), der im Inneren des ersten Ladeluftbehälters (3) angeordnet und an die Zylinder (4, 4') des Motors (1) sowie den Kompressorauslass (12d, 12d') des zweiten Turboladers (12, 12') angeschlossen ist.

7. Motor (1) nach Anspruch 6, **dadurch gekennzeichnet, dass** der Motor (1) ein Isolationsgehäuse (10) umfasst und der Abgaskrümmer (5, 5') und die Zwischenabgasleitung (7, 7') im Inneren des Isolationsgehäuses (10) angeordnet sind.

8. Motor (1) nach Anspruch 6 oder 7, **dadurch gekennzeichnet, dass** der Motor (1) einen ersten Ladeluftkühler (6, 6') umfasst, der zwischen dem Kompressor (2a, 2a') des ersten Turboladers (2, 2') und dem ersten Ladeluftbehälter (3) angeordnet ist, und der Aufrüstsatz einen zweiten Ladeluftkühler (16, 16') umfasst, der zwischen dem Kompressor (12a, 12a') des zweiten Turboladers (12, 12') und dem zweiten Ladeluftbehälter (13) angeordnet ist.

9. Motor (1) nach einem der Ansprüche 6 bis 8, **dadurch gekennzeichnet, dass** der Motor (1) ein V-Motor ist, der für jede Bank des Motors einen Abgaskrümmer (5, 5'), einen ersten Turbolader (2, 2') und einen ersten Ladeluftkühler (6, 6') umfasst, und dass der Aufrüstsatz einen zweiten Turbolader (12, 12'), einen zweiten Ladeluftkühler (16, 16') und eine Zwischenabgasleitung (7, 7') für jede Bank des Motors (1) umfasst.

## Revendications

1. Procédé pour la mise à niveau d'un moteur à combustion interne à turbocompresseur (1), lequel moteur (1) comprend
- un premier turbocompresseur (2, 2') qui est disposé à la première extrémité du moteur (1),
- un premier récepteur d'air de suralimentation (3) qui est raccordé à la sortie du compresseur (2d, 2d') du premier turbocompresseur (2, 2') et aux cylindres (4, 4') du moteur (1) et,
- un collecteur d'échappement (5, 5') qui est raccordé aux cylindres (4, 4') du moteur (1) et à l'entrée de turbine (2e, 2e') du premier turbocompresseur (2, 2'),
**caractérisé en ce que** la procédé comprend les étapes de
- débranchement du collecteur d'échappement (5, 5') des cylindres (4, 4') du moteur (1) et de l'entrée de turbine (2e, 2e') du premier turbocompresseur (2, 2'),
- mise en place d'un deuxième turbocompresseur (12, 12') à la deuxième extrémité du moteur (1),
- raccordement d'un collecteur d'échappement (5, 5') aux cylindres (4, 4') du moteur (1) et à l'entrée de turbine (12e, 12e') du deuxième turbocompresseur (12, 12'),
- mise en place d'un conduit d'échappement intermédiaire (7, 7') entre la sortie de turbine (12f, 12f') du deuxième turbocompresseur (12, 12') et l'entrée de turbine (2e, 2e') du premier turbocompresseur (2, 2'),
- mise en place d'un deuxième récepteur d'air de suralimentation (13) à l'intérieur du premier récepteur d'air de suralimentation (3),
- raccordement du deuxième récepteur d'air de suralimentation (13) aux cylindres (4, 4') du moteur (1),
- raccordement du deuxième récepteur d'air de suralimentation (13) à la sortie de compresseur (12d, 12d') du deuxième turbocompresseur (12, 12'), et
- raccordement du premier récepteur d'air de suralimentation (3) à l'entrée du compresseur (12c, 12c') du deuxième turbocompresseur (12, 12').

2. Procédé selon la revendication 1, **caractérisé en ce que** le conduit d'échappement intermédiaire (7, 7') est disposé à l'intérieur d'un caisson d'isolation (10).

3. Procédé selon la revendication 1 ou 2, **caractérisé en ce qu'**un refroidisseur à air de suralimentation (16, 16') est disposé entre le compresseur (12a, 12a') du deuxième turbocompresseur (12, 12') et le deuxième récepteur d'air de suralimentation (13).

4. Matériel pour la mise à niveau d'un moteur à combustion interne à turbocompresseur (1), lequel moteur (1) comprend
- un premier turbocompresseur (2, 2') qui est disposé à la première extrémité du moteur (1),
- un premier récepteur d'air de suralimentation (3) qui est raccordé à la sortie du compresseur (2d, 2d') du premier turbocompresseur (2, 2') et aux cylindres (4, 4') du moteur (1), et
- un collecteur d'échappement (5, 5') qui est raccordé aux cylindres (4, 4') du moteur (1) et à l'entrée de turbine (2e, 2e') du premier turbocompresseur (2, 2'),
**caractérisé en ce que** le matériel de mise à niveau comprend
- un deuxième turbocompresseur (12, 12') qui peut être mis en place à la deuxième extrémité du moteur (1),
- un conduit d'échappement intermédiaire (7, 7') qui peut être mis en place entre la sortie de turbine (12f, 12f') du deuxième turbocompresseur (12, 12') et l'entrée de turbine (2e, 2e') du premier turbocompresseur (2, 2'), et
- un deuxième récepteur d'air de suralimentation (13) qui peut être mis en place à l'intérieur du premier récepteur d'air de suralimentation (3) et raccordé aux cylindres (4, 4') du moteur (1) et à la sortie du compresseur (12d, 12d') du deuxième turbocompresseur (12, 12').

5. Matériel de mise à niveau selon la revendication 4, **caractérisé en ce que** le matériel de mise à niveau comprend un refroidisseur d'air de suralimentation (16, 16').

6. Moteur à combustion interne à turbocompresseur (1) comprenant
- un premier turbocompresseur (2, 2') qui est disposé à la première extrémité du moteur (1),
- un premier récepteur d'air de suralimentation (3) qui est raccordé à la sortie du compresseur (2d, 2d') du premier turbocompresseur (2, 2'), et
- un collecteur d'échappement (5, 5') qui est raccordé aux cylindres (4, 4') du moteur (1),
**caractérisé en ce que** le moteur (1) comprend un matériel de mise à niveau comprenant
- un deuxième turbocompresseur (12, 12') qui est disposé à la deuxième extrémité du moteur (1) et dont l'entrée du compresseur (12c, 12c') est raccordée au premier récepteur d'air de suralimentation (3),
- un conduit d'échappement intermédiaire (7, 7') qui peut être mis en place entre la sortie de turbine (12f, 12f') du deuxième turbocompresseur (12, 12') et l'entrée de turbine (2e, 2e') du premier turbocompresseur (2, 2'), et
- un deuxième récepteur d'air de suralimentation (13) qui est disposé à l'intérieur du premier récepteur d'air de suralimentation (3) et raccordé aux cylindres (4, 4') du moteur (1) et à la sortie du compresseur (12d, 12d') du deuxième turbocompresseur (12, 12').

7. Moteur (1) selon la revendication 6, **caractérisé en ce que** le moteur (1) comprend un caisson d'isolation (10) et le collecteur d'échappement (5, 5') et le conduit d'échappement intermédiaire (7, 7') sont disposés à l'intérieur du caisson d'isolation (10).

8. Moteur (1) selon la revendication 6 ou 7, **caractérisé en ce que** le moteur (1) comprend un premier refroidisseur d'air de suralimentation (6, 6') qui est disposé entre le compresseur (2a, 2a') du premier turbocompresseur (2, 2') et le premier récepteur d'air de suralimentation (3) et le matériel de mise à niveau comprend un deuxième refroidisseur d'air de suralimentation (16, 16') qui est disposé entre le compresseur (12a, 12a') du deuxième turbocompresseur (12, 12') et le deuxième récepteur d'air de suralimentation (13).

9. Moteur (1) selon l'une quelconque des revendications 6-8, **caractérisé en ce que** le moteur (1) est un moteur en V comprenant un collecteur d'échappement (5, 5'), un premier turbocompresseur (2, 2') et un premier refroidisseur d'air de suralimentation (6, 6') pour chaque côté de moteur (1) et le matériel de mise à niveau comprend un deuxième turbocompresseur (12, 12'), un deuxième refroidisseur d'air de suralimentation (16, 16') et un conduit d'échappement intermédiaire (7, 7') pour chaque côté de moteur (1).
